# FASCICULE DE BREVET EUROPEEN

(11) **EP 2 476 225 B1**
(45) Date de publication et mention de la délivrance du brevet: **26.02.2014**
(21) Numéro de dépôt: 10754912.3
(22) Date de dépôt: 10.09.2010
(51) Int. Cl.: H04L 12/70, H04L 12/46

(54) **PROCEDE ET SYSTEME POUR LE CONTROLE DE L'ACHEMINEMENT D'UN FLUX DE DONNEES D'UNE CLASSE DE SERVICE A TRAVERS UN RESEAU MAILLE ET CHIFFRE**
VERFAHREN UND SYSTEM ZUR STEUERUNG DES LEITWEGS EINES DATENSTROMS VON EINER DIENSTKLASSE ÜBER EIN VERSCHLÜSSELTES MESH-NETZWERK
METHOD AND SYSTEM FOR CONTROLLING THE ROUTING OF A DATA STREAM FROM A CLASS OF SERVICE THROUGH A MESHED AND ENCRYPTED NETWORK

(30) Priorité: 11.09.2009 FR 0904342
(43) Date de publication de la demande: 18.07.2012
(73) Titulaire: Thales, 92200 Neuilly Sur Seine (FR)
(72) Inventeur: ALATERRE, Laurent, F-92700 Colombes (FR); FORNARI, Michel, F-92700 Colombes (FR)
(74) Mandataire: Lucas, Laurent Jacques
(86) Numéro de dépôt international: PCT/EP2010/063332
(87) Numéro de publication internationale: WO 2011/029913

(56) Documents cités:
- EP-A2- 1 176 788
- VICTORIA FINEBERG: "A Practical Architecture for Implementing End-to-End QoS in an IP Network", IEEE COMMUNICATIONS MAGAZINE, IEEE SERVICE CENTER, PISCATAWAY, US, vol. 40, no. 1, 1 janvier 2002 (2002-01-01), pages 122-130, XP011092765, ISSN: 0163-6804
- KENT S ET AL: "RFC 2406 - IP Encapsulating Security Payload (ESP)", INTERNET CITATION, novembre 1998 (1998-11), XP002163400, Extrait de l'Internet: URL:http://www.faqs.org/rfcs/frc2406.html [extrait le 2001-03-20]

## Description

La présente invention concerne un procédé et un système pour le contrôle de l'acheminement d'un flux de données d'une classe de service, par exemple des données d'un service multimédia, à travers un réseau maillé et chiffré.

Le terme classe de service est classiquement utilisé dans le domaine des architectures de réseau de télécommunications pour désigner une classification des types de flux de données en fonction de leur application et du service minimum requis par cette application. Une application à laquelle on peut attribuer une classe de service est, par exemple mais pas seulement, une application de téléphonie, de visioconférence, de messagerie ou de téléchargement de fichiers. Tout type d'application communicante exécutée dans un réseau de communication peut être considéré. Le service requis peut être explicité notamment, mais pas uniquement, en terme de débit garanti, de taux de pertes paquets sur la liaison, de latence. En fonction des contraintes plus ou moins importantes sur le service, les applications peuvent être classées par ordre de priorité. La définition des classes de service est utilisée notamment dans ce but.

L'invention s'applique pour tous les systèmes qui comportent d'une part une pluralité de réseaux privés locaux, réservés à un groupe d'utilisateurs, et d'autre part un réseau public ou réseau de transit qui permet d'interconnecter les différents réseaux privés entre eux. Des utilisateurs distants, situés sur des réseaux privés distincts, communiquent entre eux par le biais d'applications, par exemple des applications multimédia temps-réel ou non. Les flux de données engendrés par ces communications traversent le réseau public qui comporte un ou plusieurs routeurs dont la fonction est le routage et l'acheminement des flux depuis leur utilisateur source jusqu'à leur destination.

Certains systèmes critiques nécessitent de sécuriser fortement l'accès aux réseaux privés pour des raisons de confidentialité des données transmises. Pour cette raison, des dispositifs de chiffrement sont utilisés afin de crypter les données émises depuis un réseau privé dans le but de rendre ces données inexploitables, pour un tiers non autorisé, lors de leur transfert via le réseau public de transit.

De par l'utilisation de ces dispositifs de chiffrement, les réseaux locaux privés sont totalement séparés du réseau de transit public depuis lequel il n'est pas possible d'accéder aux données transmises et notamment de connaître le type d'application associé à ces données.

Voir par exemple le document "a practical architecture for implementing End-to-End QoS in IP network", V. Fineberg, IEEE communications magazine.

Le problème se pose alors de la maîtrise du réseau de transit par l'utilisateur. Par maîtrise on entend notamment la capacité à transmettre un flux vers un réseau local privé distant, à travers le réseau de transit, avec des contraintes données dépendantes du type d'application. Ces contraintes correspondent à un niveau de service que l'on souhaite garantir pour la transmission d'un flux, en particulier en termes de taux de pertes de paquets au cours de la transmission, de délai de bout en bout ou de débit assuré. La maîtrise du réseau englobe également la supervision du réseau de transit afin de connaître à chaque instant les chemins disponibles avec leurs capacités en terme de débits et ceux qui sont au contraire défectueux.
De par l'introduction de dispositifs de chiffrement entre les réseaux privés et le réseau de transit, la maîtrise dudit réseau de transit devient problématique. En particulier, lorsqu'un chemin direct, au sein du réseau de transit, est défectueux, les routeurs mettent en oeuvre des protocoles de routage dynamiques qui affectent un chemin secondaire pour la transmission d'un flux de données. Les routeurs du réseau de transit ne peuvent pas garantir une qualité de service donnée puisqu'ils n'ont pas connaissance de l'application transmise et de ses contraintes, notamment en terme de débit requis, cette application ayant subit une étape de chiffrement. De ce fait, des problèmes de congestion non maîtrisées peuvent apparaître dans le réseau de transit lorsqu'un chemin est défectueux et que les flux de données supposés emprunter ce chemin sont routés vers d'autres chemins dont la capacité n'est pas connue à priori.

Les solutions de l'art antérieur au problème technique précédemment introduit sont principalement de deux types.

Un premier ensemble de solutions concerne l'utilisation de dispositifs de chiffrement qui peuvent être configurés afin de transmettre certains flux de signalisation en clair. Ces flux peuvent alors être utilisés pour superviser le réseau de transit et communiquer aux utilisateurs l'état de fonctionnement du réseau et inversement aux routeurs le type d'application transmise avec leurs contraintes de qualité de service associées.
De telles solutions ne sont pas envisageables pour des systèmes très critiques qui nécessitent un haut niveau de sécurité et par conséquent le chiffrement complet de toutes les communications transmises entre le réseau privé local et le réseau public de transit.

Un second ensemble de solutions concernent les systèmes basés sur des procédés de chiffrement dits en mode transport. Ces procédés consistent à ne chiffrer que la partie utile des paquets de données, permettant ainsi d'identifier en clair l'entête de ces paquets qui contient notamment les adresses source et destination ainsi que le type d'application utilisée. Ces solutions ne sont pas envisageables pour les mêmes raisons citées au paragraphe précédent, l'invention se positionne dans le cadre de systèmes critiques pour lesquels il est nécessaire de chiffrer toute l'information contenue dans un flux de données provenant d'un réseau privé local et à destination d'un réseau de transit privé.

La présente invention propose une solution, adaptée aux systèmes critiques, permettant de pallier les limitations des solutions antérieures citées précédemment. Elle permet de garantir la transmission d'un flux de données avec des contraintes à respecter ainsi que la supervision du réseau de transit tout en garantissant la totale confidentialité des données échangées entre les réseaux privés et publics.

A cet effet, l'invention a pour objet un procédé selon la revendication 1.

L'invention a également pour objet un système selon la revendication 3.

Les revendications 2 et 4 contiennent de variantes de réalisation.

Dans une variante de réalisation de l'invention, ledit réseau maillé est un réseau IP et ledit champ QoS est le champ DSCP de l'en-tête IP.

L'invention a également pour objet l'utilisation du procédé ou du système décrit précédemment pour la supervision ou l'hypervision dudit réseau public de transit depuis l'un des réseaux privés locaux caractérisé en ce que la perte de connectivité d'un chemin dudit réseau public de transit est détectée par le biais de l'émission, par ledit module de contrôle du routage, d'un message de contrôle à destination d'un réseau privé local distant.

D'autres caractéristiques et avantages de la présente invention apparaîtront mieux à la lecture de la description qui suit en relation aux dessins annexés qui représentent :
La figure 1, un schéma d'un exemple de système de l'art antérieur comportant plusieurs réseaux locaux privés interconnectés à un réseau de transit via des dispositifs de chiffrement,
La figure 2, une illustration de la mise en oeuvre du procédé selon l'invention pour le système décrit à la figure 1.

Les exemples qui suivent sont décrits dans le cadre d'un réseau de communication de type IP (« Internet Protocol ») mais cette caractéristique ne saurait être interprétée comme étant limitative, elle a pour but au contraire de favoriser la compréhension de l'invention par le biais d'une illustration précise. Il est entendu que l'invention s'applique également à tout type de réseau de communication au sein duquel des flux de données sont échangés sous forme de paquets comportant une partie de données utiles et une partie en-tête, ledit en-tête comportant des informations de signalisation associées audit paquet.

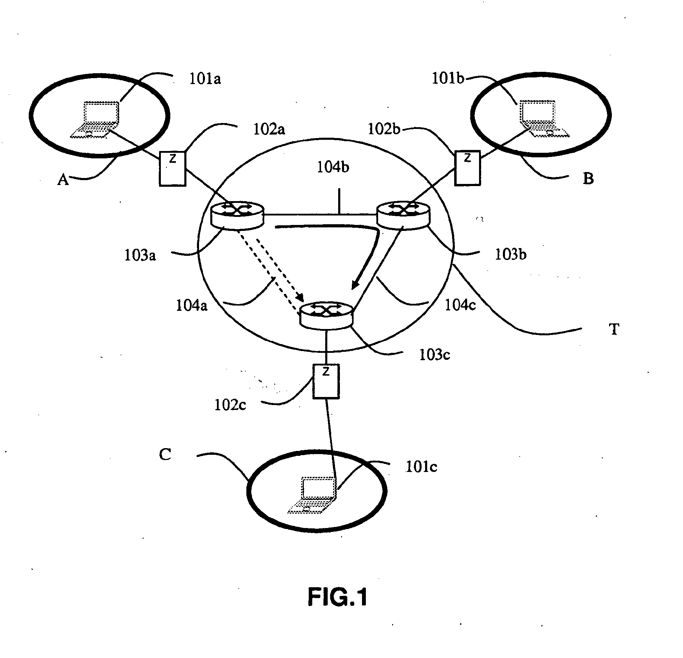

La figure 1 schématise un système comportant plusieurs réseaux locaux privés A,B,C, chacun étant constitué d'au moins un terminal utilisateur 101a,101b,101c. Les trois réseaux locaux privés A,B,C sont interconnectés entre eux au moyen d'un réseau de transit T qui comporte, pour chaque réseau local privé, un routeur 103a,103b,103c qui assure les fonctions de routage statique ou dynamique au sein du réseau de transit T afin d'acheminer les flux de données issus d'un terminal utilisateur situé dans un réseau local vers un autre terminal utilisateur situé dans un réseau local distant. Afin de sécuriser les informations et de garantir une confidentialité des transmissions entre les différents réseaux locaux privés A,B,C, des dispositifs de chiffrement 102a,102b,102c sont disposés entre chaque réseau local privé et le routeur associé afin de chiffrer l'intégralité des données. Un flux de données, par exemple un flux de voix sur IP ou de vidéoconférence est émis depuis un terminal 101 a, à destination du terminal 101 c, sous forme de paquets IP comportant un en-tête et une partie utile. Chaque paquet IP est chiffré intégralement par le dispositif de chiffrement 102a qui produit ensuite un nouveau paquet IP chiffré constitué d'une part du paquet initial chiffré auquel est rajouté un entête IP spécifique dans lequel sont renseignés l'adresse source du dispositif de chiffrement 102a et l'adresse du dispositif de chiffrement 102c destinataire du paquet chiffré. Le nouveau paquet IP obtenu en sortie du dispositif de chiffrement 102a ne contient plus en clair ni l'adresse source du terminal utilisateur 101a ni les informations associées à l'application utilisée. Les flux de données ainsi générés sont ensuite transmis, via un chemin primaire 104a, dans le réseau de transit T et acheminés jusqu'au dispositif de chiffrement destinataire 102c associé à un réseau local destinataire C. A la réception des paquets IP chiffrés, le dispositif de chiffrement 102c similaire à celui utilisé en émission décrypte lesdits paquets et les transmet au terminal utilisateur 101c.

Lorsque le chemin primaire 104a est défectueux, le protocole de routage mis en oeuvre par le routeur 103a détermine un chemin secondaire 104b, 104c qui permet d'acheminer le flux de données vers sa destination C en passant par un routeur intermédiaire 103b. Le choix de ce chemin secondaire et la redirection du flux de données vers ce chemin se fait sans connaissance a priori du type d'application véhiculée et de ses contraintes en terme de qualité de service requise et également sans connaître la capacité et les ressources disponibles sur ce chemin secondaire 104b,104c. L'utilisation de protocoles de routage sans connaissance a priori du type d'application et de la qualité de service requise associée peut conduire à des phénomènes de congestion sur le chemin secondaire 104b,104c qui ne possède peut être pas les ressources suffisantes pour accepter un trafic supplémentaire à celui qu'il supporte déjà nominalement. De plus, pour des applications nécessitant un fort degré de sécurité, il est nécessaire que le chemin que va emprunter le flux de données soit maîtrisé à priori, sans laisser cette décision aux routeurs situés dans le réseau public.

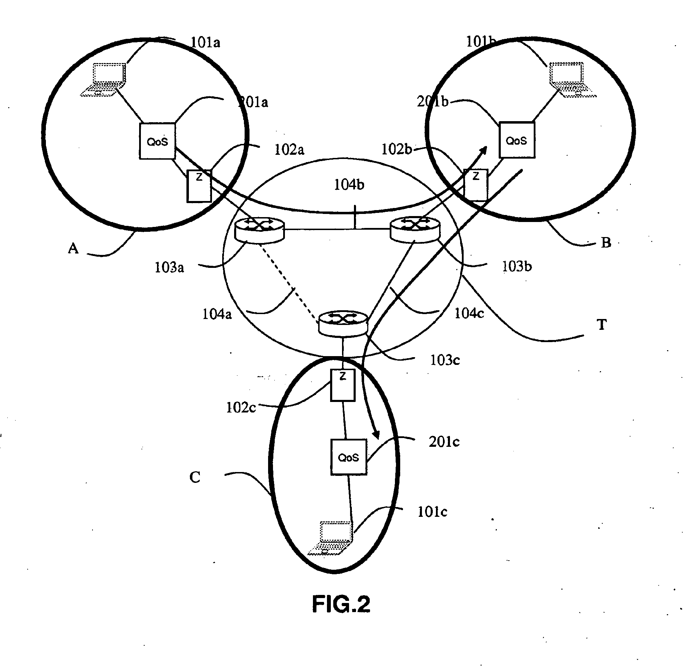

La figure 2 illustre l'application du procédé selon l'invention pour l'exemple décrit précédemment à l'appui de la figure 1. Le même système est représenté avec l'ajout, pour chaque réseau local privé A,B,C d'au moins un module 201 a,201 b,201 c de contrôle dont la fonction est de déterminer la route empruntée par chaque flux de données appartenant à chaque classe de service. Ce module est associé à chaque type d'application utilisée telle qu'une application de voix sur IP, de vidéoconférence , de messagerie textuelle instantanée ou toute autre application communicante. Il a la connaissance de la capacité des liens 104a,104b,104c physiques constituant le réseau de transit T et notamment du débit disponible sur chacun de ces liens. Il a également la connaissance du débit requis par l'application à laquelle il est associé. Le module 201a,201b,201c de contrôle du routage détermine à partir de ces informations le nombre maximum de communications point à point que peut supporter chaque lien du réseau de transit. Par exemple si le lien 104a présente un débit disponible pour un service de voix sur IP égal à 2 Mégabits/s et qu'une application de voix sur IP nécessite un débit utile de 500 Kilobits/s pour fonctionner correctement, il est possible de mettre en oeuvre quatre communications simultanées sur ce lien 104a et de garantir une qualité minimum de service pour chacune de ces communications.

Lorsque le lien 104a, du réseau de transit T est défectueux, le module 201 a ne peut plus garantir cette qualité de service car le flux de données sera redirigé, par le routeur 103a vers un lien secondaire 104b indépendamment de son contenu.

Le procédé selon l'invention consiste alors, dans un premier temps, à attribuer une classe de service pour un type d'application donnée à laquelle est associé un débit minimum requis ou un pourcentage minimum de la bande passante. De façon similaire, un délai minimum requis pour l'acheminement des paquets à leur destination, ainsi qu'un taux de pertes minimum peuvent être associés également à cette classe
Dans un deuxième temps, le module de contrôle du routage marque chaque paquet de donnée avec son information de classe de service afin de permettre la différentiation des paquets en fonction des niveaux de service requis. Ce marquage est fait en utilisant un champ de l'en-tête du paquet. Préférablement ce champ est codé au plus sur un octet. Dans le cas d'un réseau IP, ce champ est le champ DSCP « Differentiated Services Code Point » notamment décrit dans le standard RFC 2474 de l'organisme de normalisation IETF « Internet Engineering Task Force ». Ce champ est désigné par la suite par champ QoS, étant entendu que l'utilisation du protocole DSCP n'est qu'un exemple de réalisation de l'invention, nullement limitatif.

Dans un troisième temps, les dispositifs de chiffrement 102a,102b,102c sont configurés afin de recopier en clair le champ QoS de l'entête des données issues du réseau privé dans l'entête des paquets chiffrés émis vers le réseau de transit afin que ce champ QoS ne soit pas chiffré, le reste du paquet étant entièrement chiffré. Les paquets de données chiffrés transmis aux routeurs 103a,103b,103c contiennent donc une indication, en clair, de la classe de service associée au paquet.
Dans un quatrième temps, les routeurs 103a,103b,103c sont configurés afin de filtrer les paquets en fonction de la valeur du champ QoS.
Le filtrage est opéré de telle sorte que les paquets comportant un champ QoS donné ne sont transmis à leur destination que si le flux de données correspondant est issu ou est à destination du réseau privé immédiatement connecté au routeur. Ce filtrage interdit alors le routage à l'intérieur du réseau de transport public d'un paquet comportant un champ QoS donné.
Si un flux de données est ainsi filtré par un routeur, cette information remonte au module 201 a de gestion de contrôle du routage qui peut appliquer des règles de routage applicatif. En particulier, ce module détermine, en fonction d'une part des caractéristiques de débit disponible, de délai, et de taux de pertes paquets de chacun des liens 104a,104b,104c du réseau de transit T et d'autre part des contraintes de qualité de service de l'application, des règles de routage adaptées à l'état du réseau. Par exemple, si le module 201 a est averti de la perte de connectivité du lien 104a, il décide de rediriger le flux de données vers le chemin secondaire 104b,104c seulement si ce chemin secondaire permet de garantir la qualité de service requise pour l'application.

Le procédé selon l'invention s'applique également pour des applications de supervision ou d'hypervision du réseau de transit. En envoyant des messages de contrôle, par exemple des requêtes ICMP (Internet Control Message Protocol) à travers le réseau de transit T, l'utilisateur peut, et ce malgré le chiffrement des données, déterminer si un lien dudit réseau est défectueux. Pour cela, il suffit d'associer à ces messages de contrôle une classe de service, dont la valeur est donnée par le champ QoS, qui est systématiquement filtrée par un routeur du réseau de transit selon le principe précédemment décrit. Ainsi, le routeur n'achemine jamais les paquets transportant ces messages de contrôle à travers un chemin qui n'est pas le chemin nominal déterminé par le module de contrôle du routage. Si les messages de contrôle ne reviennent pas à l'application qui les a émis, alors cela signifie que le chemin associé est défectueux. En appliquant ce principe pour tous les réseaux privés locaux, il est possible de superviser l'ensemble du réseau de transit et ainsi de mettre à jour les tables de routage applicatif des modules de contrôle du routage.

L'invention présente notamment l'avantage de permettre une maitrise des flux transmis à travers le réseau de transit tout en garantissant une confidentialité maximum des données par le biais d'un chiffrement complet du contenu des paquets émis.

## Revendications

1. Procédé pour le contrôle de l'acheminement d'un flux de données appartenant à une classe de service à travers un réseau maillé et chiffré constitué d'une pluralité de réseaux privés locaux (A,B,C) interconnectés entre eux par le biais d'un réseau public de transit (T), chacun desdits réseaux privés locaux (A,B,C) comportant au moins un terminal utilisateur (101a,101b,101c) exécutant au moins une application communicante associée à une classe de service, un module (201a,201b,201c) de contrôle du routage pour chacune desdites applications et un dispositif de chiffrement (102a,102b,102c) des données générées par ladite application, ledit réseau public de transit (T) comportant au moins un routeur (103a,103b,103c) connecté à chaque réseau privé local (A,B,C), lesdites données générées par l'application étant émises sous forme de paquets comprenant une partie en-tête et une partie utile, ledit procédé comportant les étapes suivantes :
o Marquer chaque paquet de données avec la valeur de sa classe de service, ledit marquage étant inséré dans un champ QoS de l'en-tête dudit paquet,
o Configurer le dispositif de chiffrement (102a, 102b,102c) afin qu'il chiffre la totalité dudit paquet de données produisant ainsi un paquet chiffré et qu'il génère un nouvel en-tête associé audit paquet chiffré et comportant au moins une recopie dudit champ QoS,
ledit procédé étant **caractérisé en ce qu'**il comporte en outre l'étape suivante :
o Configurer les routeurs (103a,103b,103c) afin qu'ils filtrent les paquets ayant une valeur de champ QoS donnée et ne provenant pas et n'étant pas à destination du réseau privé local (A,B,C) auquel le routeur est immédiatement connecté,
○ Lorsqu'un paquet est filtré par un routeur (103a,103b,103c), en déduire des règles de routage applicatif adaptées à l'état du réseau, appliquées par ledit module (201a,201b,201c) de contrôle du routage.

2. Procédé selon la revendication 1 dans lequel lesdites règles de routage applicatif sont établies en fonction des caractéristiques de débit disponible, de délai et de taux de pertes paquets des liens (104a,104b,104c) dudit réseau public de transit (T) et des contraintes de qualité de service requise par ladite application communicante,

3. Système de contrôle de l'acheminement d'un flux de données appartenant à une classe de service à travers un réseau maillé et chiffré constitué d'une pluralité de réseaux privés locaux (A,B,C) interconnectés entre eux par le biais d'un réseau public de transit (T), chacun desdits réseaux privés locaux (A,B,C) comportant au moins un terminal utilisateur (101a,101b,101c) exécutant au moins une application communicante associée à une classe de service, lesdites données générées par ladite application étant émises sous forme de paquets comprenant une partie en-tête et une partie utile, ledit système comportant, pour chaque réseau privé local (A,B,C) :
o un module (201 a,201 b,201 c) de contrôle du routage pour chacune desdites applications, localisé dans ledit réseau privé local (A,B,C), ledit module étant adapté à marquer chaque paquet de données avec la valeur de sa classe de service, ledit marquage étant inséré dans un champ QoS de l'en-tête dudit paquet,
○ un dispositif de chiffrement (102a,102b,102c) des données générées par ladite application, ledit dispositif étant localisé dans ledit réseau privé local (A,B,C) et étant configuré pour chiffrer la totalité dudit paquet de données et générer un nouvel en-tête associé audit paquet de données chiffré et comportant au moins une recopie dudit champ QoS,
ledit système étant **caractérisé en ce que** :
○ il comporte un routeur (103a,103b,103c) localisé dans ledit réseau public de transit (T), connecté audit réseau privé local (A,B,C) et configuré pour filtrer les paquets ayant une valeur de champ QoS donnée et ne provenant pas et n'étant pas à destination dudit réseau privé local (A,B,C) auquel il est immédiatement connecté,
○ ledit module (201a,201b,201c) de contrôle du routage est configuré pour, lorsqu'un paquet est filtré par un routeur (103a,103b,103c), en déduire des règles de routage applicatif adaptées à l'état du réseau.

4. Système selon la revendication 3 dans lequel lesdites règles de routage applicatif sont établies en fonction des caractéristiques de débit disponible, de délai et de taux de pertes paquets des liens (104a,104b,104c) dudit réseau public de transit (T) et des contraintes de qualité de service requise par ladite application communicante,

5. Procédé selon l'une des revendications 1 ou 2 ou Système selon l'une des revendications 3 ou 4 dans lequel ledit réseau maillé est un réseau IP et ledit champ QoS est le champ DSCP de l'en-tête IP.

6. Utilisation du procédé ou du système selon l'une des revendications précédentes pour la supervision ou l'hypervision dudit réseau public de transit (T) depuis l'un des réseaux privés locaux (A) **caractérisé en ce que** la perte de connectivité d'un chemin dudit réseau public de transit (T) est détectée par le biais de l'émission, par ledit module (201 a) de contrôle du routage, d'un message de contrôle à destination d'un réseau privé local distant (B,C).

## Patentansprüche

1. Verfahren zur Steuerung des Leitwegs eines Datenstroms, der einer Dienstklasse angehört, über ein verschlüsseltes Mesh-Netzwerk, das aus einer Vielzahl lokaler privater Netzwerke (A, B, C) besteht, die miteinander anhand eines öffentlichen Transitnetzwerks (T) verbunden sind, wobei jedes der lokalen privaten Netzwerke (A, B, C) mindestens ein Benutzer-Endgerät (101a, 101b, 101c), das mindestens eine kommunizierende Applikation durchführt, die einer Dienstklasse zugeordnet ist, ein Routing-Steuermodul (201a, 201b, 201c) für jede der Applikationen und eine Vorrichtung zur Verschlüsselung (102a, 102b, 102c) der von der Applikation erzeugten Daten aufweist, wobei das öffentliche Transitnetzwerk (T) mindestens einen Router (103a, 103b, 103c) aufweist, der mit jedem lokalen privaten Netzwerk (A, B, C) verbunden ist, wobei die von der Applikation erzeugten Daten in Form von Paketen gesendet werden, die einen Header und einen Nutzteil umfassen, wobei das Verfahren die folgenden Schritte aufweist:
○ Markieren jedes Datenpakets mit dem Wert seiner Dienstklasse, wobei die Markierung in ein QoS-Feld im Header des Pakets eingefügt ist,
○ Konfigurieren der Verschlüsselungsvorrichtung (102a, 102b, 102c), damit sie die Gesamtheit des Datenpakets verschlüsselt und auf diese Weise ein verschlüsseltes Paket produziert und einen neuen Header erzeugt, der dem verschlüsselten Paket zugeordnet ist und mindestens eine Rückkopie des QoS-Felds aufweist,
wobei das Verfahren **dadurch gekennzeichnet ist, dass** es ferner die folgenden Schritte umfasst:
○ Konfigurieren der Router (103a, 103b, 103c), damit sie die Pakete filtern, die einen bestimmten QoS-Feldwert haben und nicht aus der und nicht in die Richtung des lokalen privaten Netzwerks (A, B, C) kommen und gehen, mit dem der Router direkt verbunden ist,
○ wenn ein Paket von einem Router (103a, 103b, 103c) gefiltert ist, Ableiten daraus der Regeln des applikativen Routings, die an den Zustand des Netzes angepasst sind, die von dem Routing-Steuermodul (201a, 201b, 201c) angewendet werden.

2. Verfahren nach Anspruch 1, wobei die Regeln des applikativen Routings in Abhängigkeit von den Merkmalen des verfügbaren Durchsatzes, der Frist und der Paketverlustrate der Verbindungen (104a, 104b, 104c) des öffentlichen Transitnetzwerks (T) und den Qualitätsanforderungen, die von der kommunizierenden Applikation verlangt werden, erfolgt.

3. System zur Steuerung des Leitwegs eines Datenstroms, der einer Dienstklasse angehört, über ein verschlüsseltes Mesh-Netzwerk, das aus einer Vielzahl lokaler privater Netzwerke (A, B, C) besteht, die miteinander anhand eines öffentlichen Transitnetzwerks (T) verbunden sind, wobei jedes der lokalen privaten Netzwerke (A, B, C) mindestens ein Benutzer-Endgerät (101a, 101b, 101c), das mindestens eine kommunizierende Applikation durchführt, die einer Dienstklasse zugeordnet ist, aufweist, wobei die von der Applikation erzeugten Daten in Form von Paketen gesendet werden, die einen Header-und einen Nutzteil umfassen, wobei das System für jedes lokale private Netzwerk (A, B, C) aufweist:
○ ein Routing-Steuermodul (201a, 201b, 201c) für jede der Applikationen, das in dem lokalen privaten Netzwerk (A, B, C) lokalisiert ist, wobei das Modul geeignet ist, jedes Datenpaket mit dem Wert seiner Dienstklasse zu markieren, wobei die Markierung in ein QoS-Feld im Header des Pakets eingefügt ist,
○ eine Vorrichtung zur Verschlüsselung (102a, 102b, 102c) der von der Applikation erzeugten Daten, wobei die Vorrichtung in dem lokalen privaten Netzwerk (A, B, C) lokalisiert ist und konfiguriert, um die Gesamtheit des Datenpakets zu verschlüsseln und einen neuen Header zu erzeugen, der dem verschlüsselten Paket zugeordnet ist und mindestens eine Rückkopie des QoS-Felds aufweist,
wobei das System **dadurch gekennzeichnet ist, dass**:
○ es einen Router (103a, 103b, 103c) aufweist, der in dem öffentlichen Transitnetzwerk (T) lokalisiert ist, der mit dem lokalen privaten Netzwerk (A, B, C) verbunden ist und konfiguriert, um die Pakete zu filtern, die einen bestimmten QoS-Feldwert haben und nicht aus der und nicht in die Richtung des lokalen privaten Netzwerks (A, B, C) kommen und gehen, mit dem er direkt verbunden ist,
○ das Routing-Steuermodul (201a, 201b, 201c) konfiguriert ist, um, wenn ein Paket von einem Router (103a, 103b, 103c) gefiltert ist, daraus die Regeln des applikativen Routings, die an den Zustand des Netzes angepasst sind, abzuleiten.

4. System nach Anspruch 3, wobei die Regeln des applikativen Routings in Abhängigkeit von den Merkmalen des verfügbaren Durchsatzes, der Frist und der Paketverlustrate der Verbindungen (104a, 104b, 104c) des öffentlichen Transitnetzwerks (T) und der Qualitätsanforderungen, die von der kommunizierenden Applikation verlangt werden, erfolgt.

5. Verfahren nach den Ansprüchen 1 oder 2 oder System nach den Ansprüchen 3 oder 4, wobei das Mesh-Netzwerk ein IP-Netzwerk ist und das QoS-Feld das DSCP-Feld des IP-Headers ist.

6. Verwendung des Verfahrens oder des Systems nach einem der vorangehenden Ansprüche für die Supervision oder die Hypervision des öffentlichen Transitnetzwerks (T) von einem der lokalen privaten Netzwerke (A), **dadurch gekennzeichnet, dass** der Konnektivitätsverlust eines Wegs des öffentlichen Transitnetzwerks (T) über die Sendung einer Kontrollmeldung in Richtung eines entfernten lokalen privaten Netzwerks (B, C) durch das Routing-Steuermodul (201a) ermittelt wird.

## Claims

1. A method for controlling the routing of a data stream belonging to a class of service through a meshed and encrypted network constituted by a plurality of private local networks (A, B, C) interconnected by means of a public transit network (T), each of said private local networks (A, B, C) comprising at least one user terminal (101a, 101b, 101c) executing at least one communicating application associated with a class of service, a module (201a, 201b, 201c) for controlling the routing for each of said applications and a device (102a, 102b, 102c) for encrypting the data generated by said application, said public transit network (T) comprising at least one router (103a, 103b, 103c) connected to each private local network (A, B, C), said data generated by the application being transmitted in the form of packets comprising a header part and a useful part, said method comprising the following steps:
○ marking each data packet with the value of its class of service, said marking being inserted in a QoS field of the header of said packet;
○ configuring said encrypting device (102a, 102b, 102c) so that it encrypts all of the data packet, thus producing an encrypted packet, and so that it generates a new header associated with said encrypted packet and comprises at least one recopy of said QoS field;
said method being **characterised in that** it further comprises the following steps:
○ configuring said routers (103a, 103b, 103c) so that they filter the packets with a given QoS field value and which do not originate from and are not intended for the private local network (A, B, C) to which said router is directly connected;
○ deducing, when a packet is filtered by a router (103a, 103b, 103c), the application routing rules adapted to the state of the network, applied by said module (201a, 201b, 201c) for controlling the routing.

2. The method according to claim 1, wherein said application routing rules are established as a function of the characteristics of available flow, delay and rate of packet losses of the links (104a, 104b, 104c) of said public transit network (T) and the quality of service constraints required by said communicating application.

3. A system for controlling the routing of a data stream belonging to a class of service through a meshed and encrypted network constituted by a plurality of private local networks (A, B, C) interconnected by means of a public transit network (T), each of said private local networks (A, B, C) comprising at least one user terminal (101a, 101b, 101c) executing at least one communicating application associated with a class of service, said data generated by said application being transmitted in the form of packets comprising a header part and a useful part, said system comprising, for each private local network (A, B, C):
○ a module (201a, 201b, 201c) for controlling the routing for each of said applications, located in said private local network (A, B, C), said module being designed to mark each data packet with the value of its class of service, said marking being inserted in a QoS field of the header of said packet;
○ a device (102a, 102b, 102c) for encrypting data generated by said application, said device being located in said private local network (A, B, C) and being configured to encrypt all of said data packet and to generate a new header associated with said encrypted data packet and comprising at least one recopy of said QoS field;
said system being **characterised in that**:
○ it comprises a router (103a, 103b, 103c) located in said public transit network (T), connected to said private local network (A, B, C) and configured to filter the packets with a given QoS field value and which do not originate from and are not intended for said private local network (A, B, C) to which it is directly connected;
○ said module (201a, 201b, 201c) for controlling the routing being configured, when a packet is filtered by a router (103a, 103b, 103c), to deduce the application routing rules suitable for the state of the network.

4. The system according to claim 3, wherein said application routing rules are established as a function of the characteristics of available flow, delay, and rate of packet losses of the links (104a, 104b, 104c) of said public transit network (T) and the quality of service constraints required by said communicating application.

5. The method according to claim 1 or 2 or the system according to claim 3 or 4, wherein said meshed network is an IP network and said QoS field is the DSCP field of the IP header.

6. The use of the method or the system according to any one of the preceding claims for the supervision or hypervision of said public transit network (T) from one of the private local networks (A), **characterised in that** the loss of connectivity of a field of said public transit network (T) is detected by means of the transmission, via said module (201a) for controlling the routing, of a control message intended for a remote private local network (B, C).
